(19) Europäisches Patentamt
European Patent Office
Office européen des brevets

(11) **EP 0 737 490 A1**

(12) **EUROPÄISCHE PATENTANMELDUNG**

(43) Veröffentlichungstag:
16.10.1996 Patentblatt 1996/42

(51) Int. Cl.$^6$: **A62D 3/00**

(21) Anmeldenummer: 95117440.8

(22) Anmeldetag: 06.11.1995

(84) Benannte Vertragsstaaten:
AT CH DE FR IT LI

(30) Priorität: 11.04.1995 EP 95105470

(71) Anmelder: HARD AG
CH-8604 Volketswil (CH)

(72) Erfinder:
• Frey, Alfred
CH-1470 Estavayer-le-Lac (CH)

• Ulrich, Hans-Jakob
CH-5200 Brugg (CH)

(74) Vertreter: **Troesch Scheidegger Werner AG
Patentanwälte,
Siewerdtstrasse 95,
Postfach
8050 Zürich (CH)**

(54) **Verfahren zur Immobilisierung von Schwermetallen und Element**

(57) Es wird ein Verfahren zur Immobilisierung von Schwermetallen, die in einer in mobiler Form vorliegenden Substanz vorhanden sind, wie Elektrofilterasche, vorgeschlagen, bei dem die Substanz mit Kalk emulgiert wird und die Mischung darauf hydrothermal ausgehärtet wird.

EP 0 737 490 A1

**Beschreibung**

Die vorliegende Erfindung betrifft ein Verfahren nach dem Oberbegriff von Anspruch 1 sowie ein Element nach demjenigen von Anspruch 28.

Die Erfindung geht vom Problem aus, dass in gewissen, in mobiler Form vorliegenden Substanzen, d.h. flüssigen, pulver- oder staubförmigen Substanzen, insbesondere Filteraschen, dabei vor allem Elektrofilteraschen, Schlacken und Schlämmen, oft hohe Schwermetallkonzentrationen vorliegen, derart, dass die erwähnten Substanzen nicht ohne Schutzmassnahmen gelagert werden können, weil Witterungseinflüsse, insbesondere Wasser, die Schwermetalle ausschwemmen würden. Dies wiederum ergäbe eine nicht tolerable Belastung, insbesondere von Anbauflächen, Grundwasser etc.

Es sind deshalb Verfahren bekannt, solche Substanzen in Stoffe einzubinden, um damit die Eluierung (Auswaschung) der Schwermetalle zu verringern. In gewissen Ländern, so auch in der Schweiz, sind Verordnungen gültig, die festlegen, wieviel Milligramm Schwermetalle pro Liter Eluat aus den zu lagernden, die Substanzen enthaltenden Stoffen ausgewaschen werden dürfen. Entsprechend der Schärfe dieser Bestimmungen werden beispielsweise Inertstoffdeponien oder Reststoffdeponien festgelegt.

Zum Immobilisieren derartiger Substanzen, insbesondere ihrer Schwermetalle, ist es bekannt, die in mobiler Form vorliegenden Substanzen mit Portlandzement einzubinden und aushärten zu lassen. Obwohl dieses Vorgehen grossindustriell durchaus geeignet ist, ergeben sich hoher Zementbedarf und damit hohe Energiebedürfnisse für dessen Herstellung (Brennen bei ca. 1450°C): Zement ist relativ teuer.

Die vorliegende Erfindung setzt sich zum Ziel, ein Verfahren eingangs genannter Art vorzuschlagen,

a) welches grossindustriell mit wesentlich geringerem Energieaufwand durchgeführt werden kann, dabei, mindestens genähert, mit den bekannten Verfahren vergleichbare Eluattestresultate ergibt, und/oder

b) bei welchem die Eluattestresultate wesentlich verbessert sind.

Im weiteren ist es Aufgabe der vorliegenden Erfindung, ein mittels des erwähnten erfindungsgemässen Verfahrens hergestelltes Lagerelement vorzuschlagen, womit das anfallende Material kommerziell und ökologisch sinnvoll gelagert werden kann.

Zu diesem Zweck zeichnet sich das erfindungsgemässe Verfahren nach dem kennzeichnenden Teil von Anspruch 1, ein erfindungsgemässes Element nach Anspruch 28 aus.

Beim erfindungsgemässen Verfahren nach Anspruch 1 werden einerseits in grossen Mengen kostengünstig erhältlicher Kalk sowie bevorzugterweise Calcium-Silicat-Hydrate (CSH) eingesetzt, wie Bauschlamm etc. Aufgrund der Tatsache, dass dabei, wenn überhaupt, weniger Zement als bei oben angeführtem Vorgehen eingesetzt wird, sind auch die Energieaufwendungen, über alles betrachtet, wesentlich geringer. Um so erstaunlicher ist, dass die Eluattests, insbesondere was die Schwermetalle Cadmium, Blei und Zink anbelangt, ergeben, dass sich mit dem erfindungsgemässen Verfahren nach Anspruch 1, mindestens was bis heute ermittelt wurde, eher bessere Resultate ergeben als durch das bekannte Einzementieren.

Insbesondere bei Vorgehen nach Anspruch 2 ergeben sich sehr gute Eluatresultate.

Bevorzugte Ausführungsformen des erfindungsgemässen Verfahrens sind in den Ansprüchen 2 bis 27, des erfindungsgemässen Elementes in den Ansprüchen 29 bis 33 spezifiziert.

Dabei können die Resultate, Kosten sowie die Verfahrenstechnik optimiert werden, indem Verfahrensschritte nach Anspruch 1 mit weiteren der in den Ansprüchen spezifizierten oder noch weiteren kombiniert eingesetzt werden.

Das erfindungsgemässe Verfahren eignet sich insbesondere für die Immobilisierung von Schwermetallen in Aschen, insbesondere Filteraschen, dabei ganz bevorzugterweise Elektrofilteraschen, sowie weiter von Schlacken, Schlämmen etc.

Analog weist das erfindungsgemässe Element als Anreicherungsstoff insbesondere eine Asche auf. Auch wenn am erfindungsgemässen Element ein Anreicherungsstoff, wie ihn Anspruch 28 fordert, gegebenenfalls nicht nachgewiesen werden kann, unterscheidet er sich doch klar von vorbekannten dadurch, dass sein im überwiegend aus Calcium-Silicat-Hydrat bestehendes Material, wie erwähnt, gegenüber gleichem Material vorbekannter Bauelemente, einen wesentlich erhöhten Schwermetallgehalt aufweist, nämlich im Bereich des Gehaltes von nicht unbehandelt lagerbaren Substanzen.

Die Erfindung wird anschliessend anhand von Beispielen erläutert.

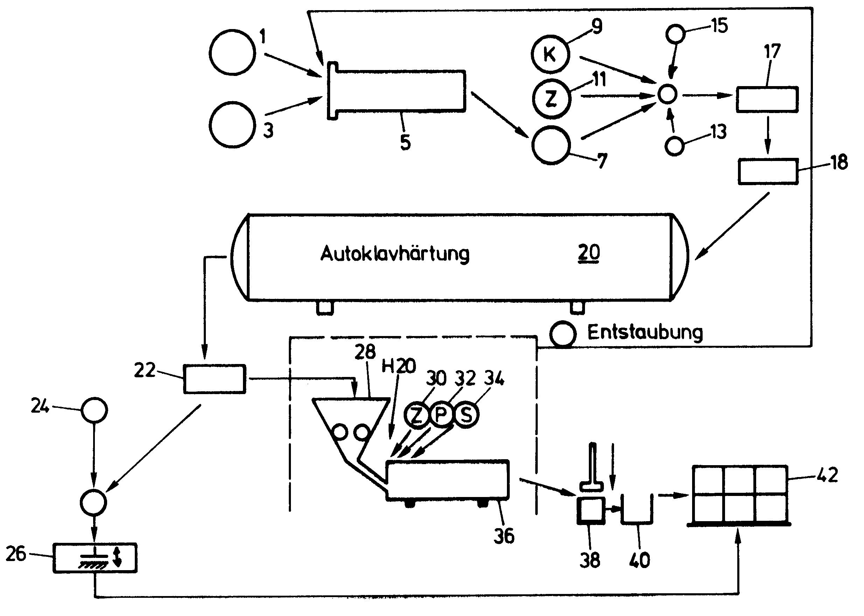

Die Figur zeigt dabei beispielsweise eine zur Ausführung des erfindungsgemässen Verfahrens geeignete Anlage.

Es wurden, wie nachfolgend beschrieben werden wird, verschiedene erfindungsgemässe Beispiele bzw. Experimente durchgeführt und bezüglich Eluierverhaltens mit einem Referenzbeispiel verglichen.

Bezüglich Stand der Technik wird verwiesen auf beispielsweise:

EP-A-0 427 899 (GOMACRIS S A SOC) 22. Mai 1991; DATABASE WPI, Section Ch, Week 8028, Derwent Publications Ltd., London, GB, Class A93, AN 80-48963C & JP-A-55 071 660 (YAMAGUCHI-KEN), 30. Mai 1980; EP-A-0 602 293 (BLANGY GERARD DE) 22. Juni 1994; WO-A-92 21409 (DEMOS DRUZSTVO) 10. Dezember 1992; DATABASE WPI, Section Ch, Week 8633, Derwent Publications Ltd., London, GB, Class A11, AN 86-218016 & SU-A-1 204 577 (KALININ POLY), 15. Januar 1986; EP-A-0 408 545 (TECHFORM ENGINEERING AG), 16. Januar 1991; DE-A-39 09 060 (PAHL EKKE DIPL ING), 20. September 1990.

In allen Beispielen wurde das Eluierverhalten wie folgt ermittelt, wobei hierzu auf die Richtlinien der schweizerischen Technischen Verordnung über Abfälle (TVA) verwiesen sei, Stand 1991:

**Eluattest**

Die Proben werden in destilliertem Wasser, in welches kontinuierlich $CO_2$ eingeblasen wird, während zweimal je 24 Stunden eluiert.

Als Kenngrösse für das Eluierverhalten der bis anhin ausgewerteten Schwermetalle Cd, Pb und Zn wird der Quotient

$$\frac{\text{Konzentration Schwermetall im Eluat in mg/l}}{\text{Grenzwert der TVA für Inertstoffqualität in mg/l}}$$

ausgewertet.

Für die vorerst betrachteten Schwermetalle Cd, Pb, Zn gelten laut TVA folgende Inertstoff-Grenzwerte:

| Cd: | 0,01mg/l |
|-----|----------|
| Pb: | 0,1mg/l |
| Zn: | 1,0mg/l |

**Verwendete Elektrofilterasche**

Die in allen Versuchen verwendete Elektrofilterasche ergab bei den Eluattests folgende Resultate:

| Cd: | 134,3 |
|-----|-------|
| Pb: | 11,5 |
| Zn: | 39,2 |

**1. Referenzbeispiel (Z)**

Für das Referenzbeispiel Z wurde die Elektrofilterasche E wie folgt behandelt:

Es wurde die folgende Mischung erstellt, wobei sich die Angaben auf g/kg Trockensubstanz am Fertigmaterial beziehen:

| Portlandzement: | 289,1 |
|-----------------|-------|
| Asche: | 667,5 |
| Kalk: | 43,4 |

Die Asche wurde mit Wasser, Kalk und Portlandzement vermischt und an der Luft ausgehärtet.

Die Eluattests an den Referenzproben Z ergaben folgendes:

| Cd: | 24,2 |
|-----|------|
| Pb: | 2,8 |
| Zn: | 19,1 |

## 2. Erfindungsgemässe Ausführungsformen

### 2.1 Minimalvorgehen

Ebenso, wie das Referenzbeispiel mit Z bezeichnet wurde, werden die nachfolgenden Beispiele auch mit Kennbuchstaben bezeichnet, um eine einfachere Bezugnahme zu den vorgenommenen Verfahrensschritten zu ermöglichen.

### Beispiel 1 (K)

Dieses Beispiel entspricht dem Vorgehen nach Anspruch 1, wobei zusätzlich CSH in die Emulsion eingebracht wurde. Die Asche wurde mit Sand und Kalk vermischt unter geringer Wasserzugabe. Der feuchte Brei wurde anschliessend mit ca. 1bar gepresst und im Autoklaven bei ca. 200°C und bei 16bar hydrothermal gehärtet.
Das Resultat setzte sich in g/kg Trockensubstanz wie folgt zusammen:

| Sand: | 417,7 |
|-------|-------|
| Asche: | 417,7 |
| Kalk: | 164,6 |

Der Eluattest ergab folgende Resultate:

| Cd: | 21,2 |
|-----|------|
| Pb: | 3,1 |
| Zn: | 9,8 |

Verglichen mit dem Referenzbeispiel Z ist das Eluierverhalten des erfindungsgemässen Beispiels K bezüglich Zn wesentlich besser und bezüglich Cd und Pb im wesentlichen gleich gut. Allerdings ist das eingesetzte Zusatzmaterial wesentlich kostengünstiger.

### Beispiel 2 (W)

Es wurde wie folgt vorgegangen:
Asche wurde direkt mit Wasserglas vermischt, gepresst und an der Luft gehärtet.

Die gehärtete Masse setzte sich wie folgt zusammen (g/kg TS):

| | |
|---|---|
| Asche: | 554,1 |
| Wasserglas: | 445,9 |

Die Eluattests ergaben:

| | |
|---|---|
| Cd: | 7,8 |
| Pb: | 1,4 |
| Zn: | 5,0 |

Dieses "Wasserglasverfahren", vergleichsweise aufgeführt, ist grosstechnisch schwieriger zu handhaben als das erfindungsgemässe "hydrothermale Härtungsverfahren", zeigt aber im Vergleich mit dem Referenzbeispiel Z, dass es auch bereits für sich ganz wesentliche Verbesserungen bezüglich des Eluierverhaltens ergibt.

**3. Bevorzugte weitere Vorgehen und Vorgehensmischformen**

**Beispiel 3 (H)**

Sandschlamm, Portlandzement, Gips und Al-Pulver als bevorzugtes Treibmittel und Wasser wurden gemischt und der Brei auf ca. 40°C erwärmt, dann die Asche zugegeben. Anschliessend wurde Kalk zugegeben, dann die Mischung in Gussformen transferiert und im Autoklaven bei 200°C und 16bar hydrothermal gehärtet. Dabei wurde eine Aufheizphase von ca. 4 Stunden und eine Reaktion bei den 200°C und 16bar während 6 Stunden durchgeführt.
Wiederum bezogen auf das resultierende Material ergaben sich folgende Verhältnisse (g/kg TS):

| | |
|---|---|
| PC-Zement: | 201,6 |
| Sand: | 340,5 |
| Asche: | 340,5 |
| Kalk: | 89,6 |
| Gips: | 26,9 |
| Al-Pulver: | 0,76 |

Die Eluattests ergaben:

| | |
|---|---|
| Cd: | 10,9 |
| Pb: | 2,0 |
| Zn: | 6,3 |

Verglichen mit dem Referenzbeispiel Z ergibt sich eine wesentliche Verbesserung des Eluierverhaltens nach dem erfindungsgemässen Beispiel H. Dabei wird durch Zugabe des Treibmittels, insbesondere des Aluminiumpulvers in bevorzugter Art, ein spezifisch leichteres Endmaterial ähnlich Porenbeton erhalten, was für den erfindungsgemässen Einsatz solchen Materials als Bauelementmaterial wesentliche Vorteile bringen kann.

**Beispiel 4 (ZW)**

Gemäss diesem Beispiel wurde das Vorgehen nach dem Referenzbeispiel Z mit dem erfindungsgemässen W kombiniert, und zwar wurde das Zement-abgebundene Material sowohl unzerkleinert (ZW) wie auch pulverisiert (ZW$_p$) mit Wasserglas gemischt.

Für ZW wurden ca. 100cm$^3$ grosse Probekörper nach Z während zwei Tagen in flüssiges Wasserglas eingebracht und anschliessend während ca. einer Woche an der Luft getrocknet, bevor sie dem Eluattest unterzogen wurden. Für ZW$_p$ wurden die Proben aus Z im Achatmörser zerkleinert und mit Wasserglas vermischt. Nach Trocknung an der Luft wurden die gehärteten Proben eluiert.

Am Resultatmaterial ergab sich (g/kg TS):

|  | ZW | ZW$_p$ |
|---|---|---|
| PC-Zement: | 272,1 | 166,8 |
| Asche: | 628,1 | 385,1 |
| Kalk: | 40,8 | 25,0 |
| Wasserglas: | 59,0 | 423,0 |

Folgendes waren die Resultate des Eluattests:

|  | ZW | ZW$_p$ |
|---|---|---|
| Cd: | 2,7 | 3,3 |
| Pb: | 0,6 | 2,2 |
| Zn: | 1,8 | 2,1 |

Mit beiden Vorgehen wurde eine massgebliche Verbesserung des Eluierverhaltens bezüglich des Referenztests Z gefunden.

**Beispiel 5 (KW und KW$_p$)**

In diesem Beispiel wurde das nach Beispiel 1, K, hydrothermal gehärtete Material unzerkleinert (KW) bzw. pulverisiert (KW$_p$) nach dem Wasserglasverfahren von Anspruch 2 bzw. Beispiel W weiterbehandelt. Hierzu wurde vorerst nach dem ersten Beispiel (K) vorgegangen und darnach nach dem zweiten (W). Gesamthaft wurden für das fertige Material folgende Trockensubstanzen eingesetzt:

|  | KW | KW$_p$ |
|---|---|---|
| Sand: | 397,4 | 198,5 |
| Asche: | 397,4 | 198,6 |
| Kalk: | 156,5 | 78,3 |
| Wasserglas: | 48,7 | 524,1 |

Die Eluattests ergaben folgende Resultate:

|      | KW  | $KW_p$ |
|------|-----|--------|
| Cd:  | 8,6 | 17,2   |
| Pb:  | 2,6 | 55,9   |
| Zn:  | 2,0 | 2,3    |

Wiederum wurde ein Eluierverhalten erzielt, das für KW wesentlich besser ist als das Referenzbeispiel Z.

**Beispiel 6 (ZH)**

Die Asche wurde vermischt mit Zement, Kalk und Wasser (Z). Darnach wurde die hydrothermale Härtung gemäss Beispiel 3 (H) vorgenommen.
Die ausgehärtete Masse setzte sich wie folgt zusammen (g/kg TS):

| PC-Zement: | 289,3 |
|------------|-------|
| Asche:     | 665,8 |
| Kalk:      | 44,9  |

Die Eluattests ergaben folgendes:

| Cd: | 23,5 |
|-----|------|
| Pb: | 2,1  |
| Zn: | 12,0 |

Daraus ist ersichtlich, dass bereits der Schritt der hydrothermalen Aushärtung anstelle der Betonmischung nach Beispiel Z mindestens zu gleich guten Resultaten wie das wesentlich teurere Mischen mit Zement nach Z ergibt.

**Beispiel 7 (WH)**

Hier wurde die Asche erst mit Wasserglas behandelt und vor dem Aushärten mit Silicaten gemischt und dann hydrothermal gehärtet.
Es wurde gemäss Beispiel 3 (H) vorgegangen, zusätzlich vor der Aluminiumpulverzugabe noch Wasserglas beigemischt. Das ausgehärtete Material hatte folgende Zusammensetzung (g/kg TS):

| | |
|---|---|
| PC-Zement: | 202,5 |
| Sand: | 162,0 |
| Asche: | 286,8 |
| Kalk: | 90,0 |
| Gips: | 27,0 |
| Al-Pulver: | 0,77 |
| Wasserglas: | 230,8 |

Durch Zugabe des Treibmittels, nämlich des Al-Pulvers, wurde porenbetonartiges Material realisiert. Der Eluattest ergab folgendes:

| | |
|---|---|
| Cd: | 5,7 |
| Pb: | 0,8 |
| Zn: | 5,6 |

**Beispiel 8 (HW)**

Hier wurde die Asche unter Bildung von Calcium-Silicat-Hydrat hydrothermal ausgehärtet, dabei Aluminiumpulver zum Erhalt einer porenbetonartigen Struktur beigefügt. Die Proben, erhalten gemäss Beispiel 3 (H), wurden anschliessend mit Wasserglas gemäss Beispiel 4 behandelt.
Die Fertigsubstanz enthielt folgende Trockensubstanzanteile (g/kg TS):

| | |
|---|---|
| PC-Zement: | 142,0 |
| Sand: | 239,6 |
| Asche: | 239,6 |
| Kalk: | 63,1 |
| Gips: | 18,9 |
| Al-Pulver: | 0,54 |
| Wasserglas | 295,8 |

Die Eluattests ergaben folgendes:

| | |
|---|---|
| Cd: | 2,8 |
| Pb: | 4,7 |
| Zn: | 0,5 |

Es ist ohne weiteres möglich, nach der hydrothermalen Härtung das resultierende Material erst zu pulverisieren, bevor es mit Wasserglas behandelt wird ($HW_p$).

**Beispiel 9 (ZHW und $ZHW_p$)**

Es wurde nach Beispiel 6 vorgegangen, das Resultat unzerkleinert (ZHW) und pulverisiert ($ZHW_p$) mit Wasserglas behandelt.

Die jeweiligen Proben waren wie folgt zusammengesetzt:

|  | ZHW | $ZHW_p$ |
| --- | --- | --- |
| PC-Zement: | 253,9 | 133,4 |
| Asche: | 584,5 | 307,0 |
| Kalk: | 39,4 | 20,7 |
| Wasserglas: | 222,1 | 539,0 |

Die Eluattests ergaben:

|  | ZHW | $ZHW_p$ |
| --- | --- | --- |
| Cd: | 3,6 | 5,6 |
| Pb: | 3,7 | 22,8 |
| Zn: | 1,0 | 1,6 |

**Beispiel 10 (MH)**

Hier wurde gemäss Beispiel 3 (H) vorgegangen, jedoch die Asche vorgängig chemisch entmetallisiert.

Die Entmetallisierung erfolgte chemisch mit Säure, Komplexbildnern und Oxidationsmitteln. Anschliessend wurde die getrocknete Asche gemäss Beispiel 3 (H) verarbeitet.

Die Fertigsubstanz setzte sich wie folgt zusammen (g/kg TS):

| PC-Zement: | 193,1 |
| --- | --- |
| Sand: | 347,0 |
| Asche: | 347,0 |
| Kalk: | 55,1 |
| Gips: | 26,1 |
| Al-Pulver: | 0,78 |

Die Eluattests ergaben:

| Cd: | 0,3 |
|-----|-----|
| Pb: | 4,6 |
| Zn: | 1,0 |

**Beispiel 11 (MHW)**

Hier wurde gemäss Beispiel 10 entmetallisierte Asche gemäss Beispiel 8 behandelt.

Die entmetallisierte Asche wurde gemäss Beispiel 3 (H) hydrothermal gehärtet, dann pulverisiert und mit Wasserglas vermischt. Nach der Härtung wurden die Probenkörper eluiert.

Die fertige Trockenmasse setzte sich wie folgt zusammen:

| PC-Zement: | 139,2 |
|-----------|-------|
| Sand: | 250,3 |
| Asche: | 250,3 |
| Kalk: | 62,1 |
| Gips: | 18,8 |
| Al-Pulver: | 0,56 |
| Wasserglas: | 278,7 |

Die Eluattests ergaben:

| Cd: | 2,4 |
|-----|-----|
| Pb: | 2,6 |
| Zn: | 0,0 |

Damit ist ersichtlich, dass, ausgehend von den erfindungsgemässen Basisverfahren, nämlich Mischen der Schwermetall-kontaminierten Substanzen primär mit Kalk, vorzugsweise aber mit Calcium-Silicat-Hydrat bildenden Substanzen, und hydrothermalem Aushärten einerseits, anderseits Behandeln der kontaminierten Substanz mit Wasserglas, in weitgehendst beliebigen Kombinationen auch mit weiteren Verfahrensschritten sich kostengünstig mindestens gleich gute, in manchen Fällen bezüglich Eluierverhaltens wesentlich verbesserte Substanzen ergeben.

**Beispiele 12**

Es wurde Asche, zu 30Gew% der Trockensubstanz, mit Calcium-Silicat-Hydrat, zu 20Gew% TS, und mit Silicon, als Hydrophobierungsmittel, letzteres in einem Anteil von 2,6Gew% der Trockensubstanz (TS), unter Beigabe von 0,06Gew% der Trockensubstanz Al geschäumt und ca. vier Stunden stehengelassen. Die entstandene Masse wurde in Blöcke geschnitten. Darnach wurde die Masse bei einem Druck von 16bar während sechs Stunden bei ca. 190° hydrothermal gehärtet.

**Beispiel 12(a)**

Die hydrothermal gehärteten Blöcke wurden mechanisch zerkleinert, ca. 2,2Gew% bezüglich Trockensubstanz Silicon sowie diesbezüglich ca. 8Gew% Wasser beigefügt und darnach die Blöcke bei 28N/mm$^2$ kompaktiert, was zu einer Volumenreduktion von ca. 50% führte. Die Eluattests ergaben folgendes Bild:

| Cd: | 1,5 |
|-----|-----|
| Pb: | 0,8 |
| Zn: | 1,3 |

Verglichen mit dem Referenzbeispiel wurden mithin ganz wesentlich verbesserte Eluatergebnisse erzielt.

**Beispiel 12(b)**

Vor der hydrothermalen Härtung wurde, anstelle von 2,6Gew% bezüglich Trockensubstanz Silicon, der Suspension ca. 2,8Gew% Wasserglas zugeführt.

Nach der hydrothermalen Härtung der ebenfalls geschnittenen Blöcke wurden letztere direkt, d.h. ohne Brechen, kompaktiert bei einem Druck von wiederum ca. 28N/mm$^2$, was wiederum zu einer Volumenreduktion von ca. 50% führte. Die Eluattests ergaben folgendes Bild:

| Cd: | 1,0 |
|-----|------|
| Pb: | 0,75 |
| Zn: | 1,2 |

Im Vergleich mit dem Referenzbeispiel führt auch dieses Vorgehen zu ausgezeichneten Resultaten.

**Beispiel 12(c)**

Vor der hydrothermalen Aushärtung wurde nicht nur Silicon, sondern sowohl Silicon wie auch Wasserglas je mit ca. 2,7Gew% Trockensubstanz der Suspension zugeführt. Nach der hydrothermalen Härtung wurde, ohne Brechen der Blöcke, die in Beispiel 12(b) definierte Komprimierung vorgenommen. Die Eluattests ergaben folgendes:

| Cd: | 1,2 |
|-----|-----|
| Pb: | 0,4 |
| Zn: | 0,8 |

Verglichen mit dem Referenzbeispiel wurden damit die Resultate noch weiter verbessert.

Es wurde grundsätzlich gefunden, dass die Eluattests durch die erfindungsgemäss bevorzugt eingesetzte Kompaktierung, nach dem hydrothermalen Härten, um ca. den Faktor 5 verbessert werden. Dies erklärt sich dadurch, dass die Poren, an deren grosser Oberfläche vorerst die Schwermetalle gebunden werden, darnach, durch Kompaktieren, wieder komprimiert werden, was das Eluierverhalten wesentlich verbessert.

**Beispiel 12(d)**

Die hydrothermal gehärteten Blöcke wurden mechanisch zerkleinert, 5 bis 20Gew% Zement beigemischt und mit 30N/mm$^2$ kompaktiert. Die Eluattests ergaben:

| Cd: | 3 |
|-----|-----|
| Pb: | 1,5 |
| Zn: | 2,5 |

**Beispiel 13**

Es wurde eine Mischung wie folgt erstellt, angegeben in Gew% Trockensubstanz:

| Asche: | 27,3 |
|--------|------|
| Sand: | 17,12 |
| Al: | 0,06 |
| Silicon: | 1,96 |
| Kaolin: | 5,1 |
| Wasser: | 41 |

wobei, als 100%-Bezugsmass, die Trockensubstanz ohne Wasser gilt.
Ohne Kompaktierung wurden nach der hydrothermalen Härtung folgende Resultate des Eluattests ermittelt:

| Cd: | 2,9 |
|-----|-----|
| Pb: | 1,7 |
| Zn: | 5,7 |

Daraus ergibt sich, dass, unter Berücksichtigung des Verbesserungsfaktors, welcher mittels der Kompaktierung erreicht wird, von, wie erwähnt, ca. 5, auch bei diesem Vorgehen äusserst gute Resultate erzielt werden.

**Weitere Beispiele**

Eine Mischung insbesondere nach Beispiel 3 oder Beispiele 12 oder 13 wird hydrothermal gehärtet und anschliessend gemäss Beispiel 12(a), (b), (c), (d) oder 13 kompaktiert.
Darauf wird die Oberfläche mittels Zement übersprüht, als Pulver oder als Spritzbeton, und es wird eine weitere hydrothermale Härtung vorgenommen während ca. sechs Stunden, bei 180$^{\circ}$C bis 200$^{\circ}$C und bei ca. 16bar.
Die Mischung setzt sich dabei im wesentlichen wie folgt zusammen:

| Zement: | 5 bis 20Gew% TS |
|---------|-----------------|
| Asche: | 30 bis 60Gew% TS |
| Kalk: | 5 bis 20Gew% TS |
| Sandschlamm: | 5 bis 30Gew% TS |
| Gips: Treibmittel | 0 bis 10Gew% TS |

Durch dieses Vorgehen ist ebenfalls eine wesentliche Verbesserung der Eluattestresultate zu erwarten, desgleichen, wenn, gemäss Beispiel 1, nachmals eine Kompaktierung bei ca. 30N/mm$^2$ erfolgt.

In der Figur ist schematisch der Ablauf des erfindungsgemässen Verfahrens an einer erfindungsgemässen Anlage dargestellt. Asche 1 und Sand 3 werden in einer Mühle 5 gemischt. Dem Mischresultat 7 wird, zur Bildung von Schlamm, Wasser (nicht dargestellt) zugeführt sowie Kalk 9, Zement 11 und, als Hydrophobierungsmittel, vorzugsweise Silicon 13, weiter ein Porenbildner, vorzugsweise Aluminiumpulver 15. Die feuchte Masse wird, wie bei 17 dargestellt, geformt und bei 18 geschnitten und schliesslich im Autoklaven 20 unter den vorbeschriebenen Druckbedingungen bei ca. 200°C hydrothermal gehärtet.

Nach Entschalung bei 22 der geformten Blöcke werden diese, gegebenenfalls unter Zementzusatz 24, bei 26 kompaktiert oder bei 28 erst gebrochen, darnach, unter Zusatz von Zement 30, Porenbetonstaub 32 und Silicon 34 bei 36, unter Zugabe von Wasser gemischt.

Anschliessend wird die Masse, beispielsweise in einer 500t-Presse 38, kompaktiert, die resultierenden Blöcke, gegebenenfalls in Paraffin getaucht oder in einem Paraffinbad getränkt, wie bei 40 dargestellt, und darnach, wie bei 42 dargestellt, gelagert.

Es versteht sich von selbst, dass nach dieser grundsätzlichen Erkenntnis das Vorgehen optimiert werden kann.

Das nach den beschriebenen erfindungsgemässen Verfahren hergestellte Material eignet sich ausgezeichnet als Lagerelementmaterial zur Erzeugung der in den Ansprüchen spezifizierten Lagerelemente.

**Patentansprüche**

1. Verfahren zur Immobilisierung von Schwermetallen, die in einer in mobiler Form vorliegenden Substanz enthalten sind, dadurch gekennzeichnet, dass es mindestens folgende Schritte umfasst:

   - Einbringen eines Stoffes mit der Substanz in eine Suspension mit Kalk,

   - hydrothermales Aushärten der resultierenden Suspension.

2. Verfahren nach Anspruch 1, dadurch gekennzeichnet, dass nach dem hydrothermalen Aushärten das Produkt kompaktiert wird.

3. Verfahren nach Anspruch 2, dadurch gekennzeichnet, dass das Produkt zwischen hydrothermalem Aushärten und Kompaktieren gebrochen wird.

4. Verfahren nach Anspruch 2, dadurch gekennzeichnet, dass das Produkt nach dem hydrothermalen Aushärten ungebrochen kompaktiert wird.

5. Verfahren nach einem der Ansprüche 1 bis 4, dadurch gekennzeichnet, dass in der Suspension, vor dem hydrothermalen Aushärten, Poren gebildet werden.

6. Verfahren nach einem der Ansprüche 1 bis 5, dadurch gekennzeichnet, dass vor der hydrothermalen Aushärtung ein Hydrophobiermittel der Suspension zugefügt wird, bei Porenbildung in der Suspension vorzugsweise vor dem Zusatz des Porenbildners.

7. Verfahren nach einem der Ansprüche 2 bis 6, dadurch gekennzeichnet, dass nach dem hydrothermalen Aushärten und vor dem Kompaktieren dem Produkt Wasserglas und/oder ein Hydrophobiermittel zugefügt wird.

8. Verfahren nach Anspruch 3, dadurch gekennzeichnet, dass dem gebrochenen Produkt Wasser zugefügt wird.

9. Verfahren nach einem der Ansprüche 6 oder 7, dadurch gekennzeichnet, dass als Hydrophobiermittel mindestens eine Substanz der Gruppe Silicone, Siliconate, Metallseifen, Phosphate zugeführt wird, vorzugsweise in einem Trockensubstanzanteil HM:

$$1Gew\% \leq HM \leq 15Gew\%, \text{ vorzugsweise von ca. 5Gew\%.}$$

10. Verfahren nach Anspruch 5, dadurch gekennzeichnet, dass die Porenbildung durch Beigabe von Al oder anderen Erdalkalimetallen und/oder $H_2O_2$ und/oder eines Schäummittels erfolgt.

11. Verfahren nach einem der Ansprüche 6, 7 oder 9, dadurch gekennzeichnet, dass als zusätzliches Verfestigungsmittel Zement zugefügt wird, vorzugsweise mit einem Trockensubstanzanteil HMZ:

4Gew% ≤ HMZ ≤ 10Gew%, vorzugsweise von ca. 5Gew%.

**12.** Verfahren nach Anspruch 2, dadurch gekennzeichnet, dass man am Produkt vor Kompaktieren einen Wassergehalt W von:

25Gew% ≤ W ≤ 35Gew% sicherstellt, vorzugsweise von ca. 30Gew%,

bezogen auf die Trockensubstanz.

**13.** Verfahren nach einem der Ansprüche 2 bis 4, dadurch gekennzeichnet, dass man mit der Kompaktierung eine Volumenreduktion ΔV von:

30% ≤ ΔV ≤ 60% realisiert, vorzugsweise von ca. 45%.

**14.** Verfahren nach einem der Ansprüche 1 bis 13, dadurch gekennzeichnet, dass man die hydrothermale Härtung bei einem Druck von mindestens 10bar, dabei vorzugsweise während mindestens drei Stunden, besonders vorzugsweise während mindestens sechs Stunden vornimmt, vorzugsweise bei Volldruck.

**15.** Verfahren nach Anspruch 5 oder 10, dadurch gekennzeichnet, dass man nach der Porenbildung die Masse während ca. vier Stunden sich stabilisieren lässt.

**16.** Verfahren nach einem der Ansprüche 1 bis 15, dadurch gekennzeichnet, dass man die Suspension vor hydrothermaler Härtung schneidet.

**17.** Verfahren nach Anspruch 2, dadurch gekennzeichnet, dass man die Kompaktierung bei einem Druck von mindestens 20N/mm$^2$, vorzugsweise von ca. 30N/mm$^2$, vornimmt.

**18.** Verfahren nach Anspruch 2, dadurch gekennzeichnet, dass man das Kompaktierungsprodukt in geschmolzenes Paraffin taucht oder in geschmolzenem Paraffin tränkt.

**19.** Verfahren nach einem der Ansprüche 1 bis 18, dadurch gekennzeichnet, dass man vor der hydrothermalen Härtung der Suspension ein Tonmineral, vorzugsweise Kaolinschlamm, zufügt.

**20.** Verfahren nach einem der Ansprüche 1 bis 19, dadurch gekennzeichnet, dass man den Stoff in eine Suspension mit Calcium-Silicat-Hydrat einbringt, vorzugsweise mit Zement.

**21.** Verfahren nach einem der Ansprüche 1 bis 20, dadurch gekennzeichnet, dass man die Suspension mit Wasserglas erstellt.

**22.** Verfahren nach einem der Ansprüche 1 bis 21, dadurch gekennzeichnet, dass man zur Bildung des Stoffes die Substanz mit mindestens einem Zusatzstoff, vorzugsweise mit Zement, mischt.

**23.** Verfahren nach einem der Ansprüche 1 bis 22, dadurch gekennzeichnet, dass man die Substanz vor hydrothermaler Härtung mit Zement abbindet.

**24.** Verfahren nach einem der Ansprüche 1 bis 23, dadurch gekennzeichnet, dass man in die Suspension Zement und/oder Sand und/oder Gips und/oder ein Hydrophobiermittel einbringt.

**25.** Verfahren nach einem der Ansprüche 1 bis 24, dadurch gekennzeichnet, dass man nach der hydrothermalen Aushärtung die Oberfläche des Produktes mit Zement behandelt und eine weitere hydrothermale Aushärtung vornimmt.

**26.** Verfahren nach einem der Ansprüche 1 bis 25, dadurch gekennzeichnet, dass eine Kompaktierung der Suspension vor der hydrothermalen Aushärtung vorgenommen wird.

**27.** Verfahren nach Anspruch 26, dadurch gekennzeichnet, dass die Mischung, welche kompaktiert wird, im wesentlichen umfasst:

| Asche: | 30 bis 70Gew% TS |
|---|---|
| CSH: | 5 bis 40Gew% TS |
| Kalk: | 5 bis 30Gew% TS |

**28.** Lagerelement, dadurch gekennzeichnet, dass es zu einem wesentlichen Anteil Kalk enthält sowie eine Anreicherungssubstanz enthält und sein Schwermetallgehalt wesentlich höher ist als bei einem gleichen Element ohne Anreicherungssubstanz.

**29.** Element nach Anspruch 28, dadurch gekennzeichnet, dass das Material zu einem wesentlichen Anteil aus Calcium-Silicat-Hydrat (CSH) besteht.

**30.** Element nach einem der Ansprüche 28 oder 29, dadurch gekennzeichnet, dass das Material Wasserglas enthält.

**31.** Element nach einem der Ansprüche 28 bis 30, dadurch gekennzeichnet, dass das Material Zement enthält.

**32.** Element nach einem der Ansprüche 28 bis 31, dadurch gekennzeichnet, dass es als Anreicherungsstoff eine Asche, einen Schlamm oder Schlacke enthält.

**33.** Element nach einem der Ansprüche 28 bis 32, dadurch gekennzeichnet, dass es hydrothermal gehärtet wurde.

**34.** Anlage zur Ausführung des Verfahrens nach einem der Ansprüche 1 bis 27, dadurch gekennzeichnet, dass sie einen Autoklaven für die hydrothermale Aushärtung umfasst.

EUROPÄISCHER RECHERCHENBERICHT

**Europäisches Patentamt**

Nummer der Anmeldung

EP 95 11 7440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | EP-A-0 427 899 (GOMACRIS S A SOC) 22.Mai 1991 <br> * Spalte 3, Zeile 22-50 * <br> * Spalte 4, Zeile 44 - Spalte 5, Zeile 13 * | 1-4,7, 20-34 | A62D3/00 |
| Y | --- | 6,7,9,10 | |
| Y | EP-A-0 518 206 (JOHNE RUDOLF) 16.Dezember 1992 <br> * Seite 4, Zeile 50 - Seite 5, Zeile 1; Ansprüche * <br> --- | 6,7,9 | |
| D,Y | DATABASE WPI <br> Section Ch, Week 8028 <br> Derwent Publications Ltd., London, GB; <br> Class A93, AN 80-48963C <br> XP002009142 <br> & JP-A-55 071 660 ( YAMAGUCHI-KEN) , <br> 30.Mai 1980 <br> * Zusammenfassung * <br> --- | 10 | |
| D,X | EP-A-0 602 293 (BLANGY GERARD DE) 22.Juni 1994 <br> * Seite 3, Spalte 45-56 * <br> * Seite 4, Zeile 36-38 * <br> --- | 1-4,7, 20-34 | **RECHERCHIERTE SACHGEBIETE (Int.Cl.6)** <br> A62D |
| D,X | WO-A-92 21409 (DEMOS DRUZSTVO) 10.Dezember 1992 <br> * Ansprüche * <br> --- | 1,2 | |
| D,X | DATABASE WPI <br> Section Ch, Week 8633 <br> Derwent Publications Ltd., London, GB; <br> Class A11, AN 86-218016 <br> XP002009143 <br> & SU-A-1 204 577 ( KALININ POLY) , <br> 15.Januar 1986 <br> * Zusammenfassung * <br> --- | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 23.Juli 1996 | Dalkafouki, A |

EPO FORM 1503 03.82 (P04C03)

Europäisches
Patentamt

**EUROPÄISCHER RECHERCHENBERICHT**

Nummer der Anmeldung

EP 95 11 7440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP-A-0 408 545 (TECHFORM ENGINEERING AG) 16.Januar 1991 --- | | |
| D,A | DE-A-39 09 060 (PAHL EKKE DIPL ING) 20.September 1990 --- | | |
| A | WO-A-88 02269 (BOELSING FRIEDRICH) 7.April 1988 ----- | | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 23.Juli 1996 | Dalkafouki, A |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes
Dokument

EPO FORM 1503 03.82 (P04C03)